# EUROPÄISCHE PATENTSCHRIFT

(11) **EP 3 304 704 B1**
(45) Veröffentlichungstag und Bekanntmachung des Hinweises auf die Patenterteilung: **13.03.2024**
(21) Anmeldenummer: 16720399.1
(22) Anmeldetag: 29.04.2016
(51) Int. Cl.: H02K 11/33

(54) **ELEKTRISCH KOMMUTIERTER ELEKTROMOTOR UND KOMFORTANTRIEB FÜR EIN KRAFTFAHRZEUG MIT EINEM DERARTIGEN ELEKTROMOTOR**
ELECTRICALLY COMMUTATED ELECTRIC MOTOR AND COMFORT DRIVE FOR A VEHICLE WITH SUCH AN ELECTRIC MOTOR
MOTEUR ELECTRIQUE A COMMUTATION ELECTRIQUE ET ENTRAINEMENT DE CONFORT POUR VEHICULE AUTOMOBILE AVEC UN TEL MOTEUR ELECTRIQUE

(30) Priorität: 08.06.2015 DE 102015210420
(43) Veröffentlichungstag der Anmeldung: 11.04.2018
(73) Patentinhaber: Robert Bosch GmbH, 70442 Stuttgart (DE)
(72) Erfinder: WILHARM, Torsten, 77815 Buehl (DE)
(86) Internationale Anmeldenummer: PCT/EP2016/059605
(87) Internationale Veröffentlichungsnummer: WO 2016/198213

(56) Entgegenhaltungen:
- WO-A1-2012/023245
- WO-A2-2010/136966
- DE-A1-102011 112 821
- DE-A1-102012 016 001
- US-A1- 2010 320 880

## Beschreibung

### Stand der Technik

Die Erfindung betrifft einen elektrisch kommutierten Elektromotor nach dem Oberbegriff des Anspruchs 1. Ferner betrifft die Erfindung einen Komfortantrieb für ein Kraftfahrzeug mit einem erfindungsgemäßen Elektromotor.

Ein elektrisch kommutierter Elektromotor nach dem Oberbegriff des Anspruchs 1 ist aus der Praxis bereits bekannt. Ein derartiger Elektromotor weist insbesondere einen mit Magnetelementen versehenen, in einer Achse drehbar gelagerten Rotor auf, der von einem Stator umgeben ist. In dem ortsfest angeordneten Stator sind Spulenwicklungen mit Wicklungsdrähten angeordnet, die durch eine zeitlich aufeinanderfolgende Bestromung eine Drehung des Rotors bewirken. Die Bestromung bzw. Ansteuerung der Spulenwicklungen erfolgt durch eine elektronische Schaltung bzw. elektronische Bauteile, die zumindest mittelbar mit den Wicklungsdrahtenden der Wicklungsdrähte bzw. der Spulenwicklungen kontaktiert sind. Wesentlich dabei ist, dass die üblicherweise auf einem Schaltungsträger in Form einer Leiterplatte angeordnete elektronische Schaltung bzw. deren Bauelemente über zusätzliche Verbindungselemente mit den Wicklungsdrahtenden verbunden sind. Derartige Verbindungselemente sind beispielsweise in Form drahtbügelförmiger Stanzgitterelemente, hakenförmiger Elemente, an denen die Wicklungsdrahtenden befestigt sind, oder ähnliches ausgebildet. Eine derartige elektrische Kontaktierung der Wicklungsdrahtenden mit dem Schaltungsträger bzw. dessen elektronischen Bauteilen ist relativ aufwändig. Oder die derartigen Verbindungselemente klemmen die durch den Schaltungsträger geführte hindurchgeführte Drähte fest. Beispiele für Verbindungen zwischen den Wicklungsdrahtenden und den Schaltungsträgern sind in folgenden Dokumenten beschrieben: US 2010320880 A, WO 2012/23245 A (mit deutschsprachigem Familienmitglied DE 11 2011 102 756 T5), DE 10 2011 112 821 A1, WO 2010/136966 A2, DE 10 2012 016 001 A1.

### Offenbarung der Erfindung

Ausgehend von dem dargestellten Stand der Technik liegt der Erfindung die Aufgabe zugrunde, einen elektrisch kommutierten Elektromotor nach dem Oberbegriff des Anspruchs 1 derart weiterzubilden, dass eine möglichst einfache elektrische Kontaktierung der Wicklungsdrahtenden der Spulenwicklungen mit dem Schaltungsträger zur elektrischen Ansteuerung bzw. Bestromung der Spulenwicklungen ermöglicht wird.

Diese Aufgabe wird erfindungsgemäß bei einem Elektromotor mit den wesentlichen Merkmalen des Anspruchs 1 dadurch gelöst, dass mit mehreren ortsfest angeordneten Spulenwicklungen, wobei jede Spulenwicklung wenigstens einen Wicklungsdraht mit einem Wicklungsdrahtende aufweist, und wobei das Wicklungsdrahtende elektrisch unmittelbar mit einem Schaltungsträger zur Ansteuerung der Spulenwicklungen verbunden ist, der Schaltungsträger als Leiterplatte und der leitende Bereich als Leiterbahn ausgebildet ist, der leitende Bereich des Schaltungsträgers auf der den Spulenwicklungen abgewandten Seite des Schaltungsträgers angeordnet ist, der Schaltungsträger eine Aussparung zur Durchführung des Wicklungsdrahtendes aufweist, die Aussparung als Bestandteil einer Klemmschneidverbindung mit einem verengten Schneidbereich für das Wicklungsdrahtende ausgebildet ist, und dass der elektrisch leitende Bereich im Anlagebereich des Wicklungsdrahtendes mit der Aussparung verbunden ist.

Mit anderen Worten gesagt bedeutet dies, dass es die erfindungsgemäße Ausbildung vorsieht, die Wicklungsdrahtenden ohne zusätzliche Verbindungselemente, wie beim Stand der Technik, mit dem Schaltungsträger zu verbinden. Dadurch ist es nicht nur möglich, auf die üblicherweise beim Stand der Technik verwendeten zusätzlichen Verbindungselemente zu verzichten, sondern es wird auch ein besonders kompakter und leichter Aufbau des Elektromotors ermöglicht, da, eine entsprechende Anordnung des Schaltungsträgers zu den Wicklungsdrahtenden vorausgesetzt, durch den Verzicht auf die zusätzlichen Verbindungselemente sowohl Bauraum als auch das Gewicht der Verbindungselemente eingespart werden kann.

Vorteilhafte Weiterbildungen des erfindungsgemäßen elektrisch kommutierten Elektromotors sind in den Unteransprüchen angegeben.

Ein besonders kompakter Aufbau des Elektromotors und eine besonders einfache und sichere Verbindung des Wicklungsdrahtendes mit dem leitenden Bereich des Schaltungsträgers wird erzielt, wenn der Schaltungsträger als Leiterplatte und der leitende Bereich als Leiterbahn ausgebildet ist.

In konstruktiv bevorzugter Anordnung des Schaltungsträgers zu den Spulenwicklungen wird vorgeschlagen, dass der leitende Bereich des Schaltungsträgers auf der den Spulenwicklungen abgewandten Seite des Schaltungsträgers angeordnet ist, und dass der Schaltungsträger eine Aussparung zur Durchführung des Wicklungsdrahtendes aufweist. Dadurch wird es ermöglicht, die elektronischen Bauteile auf dem Schaltungsträger auf der den Spulenwicklungen abgewandten Seite des Schaltungsträgers anzuordnen bzw. den Schaltungsträger in geringem axialen Abstand zu den Spulenwicklungen zu positionieren. Dies ermöglicht es, die erforderliche Länge der Wicklungsdrahtenden relativ kurz zu halten. Zusätzlich wird es dadurch auch ermöglicht, das Wicklungsdrahtende von der gut zugänglichen Seite, das heißt auf der den Spulenwicklungen abgewandten Seite des Schaltungsträgers, mit den elektrischen leitenden Bereichen zu verbinden. Dadurch wird der Einsatz konventioneller Verbindungstechniken ermöglicht, die eine rationelle und qualitativ hochwertige Verbindung der Wicklungsdrahtenden mit den elektrisch leitenden Bereichen des Schaltungsträgers ermöglichen.

In Weiterbildung des zuletzt genannten Vorschlags ist es vorgesehen, dass die Aussparung in Form einer Durchgangsöffnung ausgebildet ist, und dass das Wicklungsdrahtende mit der Oberseite des elektrisch leitenden Bereichs verbunden ist.

Die Aussparung ist als Bestandteil einer Klemmschneidverbindung mit einem verengten Schneidbereich für das Wicklungsdrahtende ausgebildet, wobei der Schneidbereich dazu ausgebildet ist, das Wicklungsdrahtende kraftschlüssig aufzunehmen, und dass der elektrisch leitende Bereich im Anlagebereich des Wicklungsdrahtendes mit der Durchgangsöffnung verbunden ist, insbesondere in Form einer Metallisierung. Diese Lösung ermöglicht es insbesondere, eine elektrisch leitende Verbindung zwischen dem Wicklungsdrahtende und dem elektrisch leitenden Bereich des Schaltungsträgers auch ohne zusätzliche Hilfsstoffe bzw. eine Löt- oder Schweißverbindung auszubilden. Dadurch ist insbesondere die thermische Belastung an den Bauteilen beim Herstellen der Verbindung relativ gering.

Obwohl grundsätzlich sämtliche bekannten Verbindungstechniken zur Verbindung zwischen dem Wicklungsdrahtende und dem elektrisch leitenden Bereich des Schaltungsträgers vorgesehen sein können, ist es bevorzugt vorgesehen, das Wicklungsdrahtende mit dem elektrisch leitenden Bereich des Schaltungsträgers zusätzlich mittels einer Löt- oder Schweißverbindung zu verbinden. Dies erfolgt insbesondere vor dem Hintergrund, dass das Wicklungsdrahtende mechanisch gesehen ein relativ flexibles Bauteil darstellt, das über die angesprochene Löt- oder Schweißverbindung besonders zuverlässig bzw. sicher mit dem Schaltungsträger verbunden bzw. positioniert werden kann. Weiterhin wird durch den Löt- bzw. Schweißprozess die Lackschicht ab Wicklungsdraht entfernt, so dass diesbezüglich kein zusätzlicher Bearbeitungsschritt erforderlich ist.

Zur Erhöhung der mechanischen Stabilität des Wicklungsdrahtendes bzw. zur Verbesserung der Verbindung zwischen dem Wicklungsdrahtende mit dem elektrischen leitenden Bereich des Schaltungsträgers ist es darüber hinaus bevorzugt vorgesehen, dass das Wicklungsdrahtende als rückgefaltetes und verdrilltes Wicklungsdrahtende ausgebildet ist.

Ein besonders kompakter Aufbau des Elektromotors wird erzielt, wenn der Schaltungsträger eine Durchgangsöffnung für einen Magnetelemente tragenden, drehbar gelagerten Rotor aufweist, und wenn der Schaltungsträger zumindest im Wesentlichen senkrecht zur Drehachse des Rotors angeordnet ist.

Die Erfindung umfasst auch einen Komfortantrieb für ein Kraftfahrzeug mit einem soweit beschriebenen Elektromotor. Unter einem Komfortantrieb für ein Kraftfahrzeug wird im Rahmen der Erfindung insbesondere, und nicht einschränkend, ein Schiebedachantrieb, ein Fensterheberantrieb, ein Sitzverstellungsantrieb oder ähnliches verstanden. Ein derartiger Komfortantrieb weist die gleichen Vorteile auf wie der soweit beschriebene Elektromotor. Insbesondere wird ein besonders kompakter und mit geringem Aufwand herstellbarer Komfortantrieb mit hoher Leistungsdichte ermöglicht.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Längsschnitt durch einen elektrisch kommutierten Elektromotor,
- Fig. 2: einen Querschnitt in Richtung II-II der Fig. 1 und
- Fig. 3: einen Querschnitt in Richtung II-II der Fig. 1 bei dem Ausführungsbeispiel der elektrischen Kontaktierung von Wicklungsdrahtenden mit einer Leiterplatte.

Gleiche Elemente bzw. Elemente mit gleicher Funktion sind in den Figuren mit den gleichen Bezugsziffern versehen.

Der in den Figuren dargestellte elektrisch kommutierte Elektromotor 10 ist Bestandteil eines nicht gezeigten Komfortantriebs in einem Kraftfahrzeug. Unter einem Komfortantrieb wird im Rahmen der Erfindung beispielsweise, und nicht einschränkend, ein Fensterheberantrieb, ein Sitzverstellungsantrieb, ein Schiebedachantrieb oder ähnliches verstanden.

Der Elektromotor 10 weist einen in einer Achse 11 drehbar gelagerten Rotor 12 auf. Der Rotor 12 trägt, wie an sich bekannt, wenigstens zwei Permanentmagnetelemente 13 zur Ausbildung beispielsweise eines sogenannten 2- oder 4-Motors (je nach Anzahl der verwendeten Permanentmagnetelemente 13). Der Rotor 12 ist innerhalb eines Gehäuses 15 des Elektromotors 10 angeordnet. Das Gehäuse 15 umfasst ein beispielhaft zylindrisch mit rundem Querschnitt ausgebildetes Statorgehäuse 16, das stirnseitig mit jeweils einem Gehäusedeckel 17, 18 verschlossen ist. In entsprechenden Aussparungen des Gehäusedeckels 17, 18 ist jeweils eine Lagereinrichtung 19, 20 angeordnet, in denen die Rotorwelle 21 des Rotors 12 drehbar gelagert ist. Die Rotorwelle 21 durchsetzt zumindest die eine Lagereinrichtung 20 und bildet außerhalb des Gehäuses 15 eine Abtriebswelle 22 aus, die zumindest mittelbar mit einem zu verstellenden Element des Komfortantriebs verbunden ist.

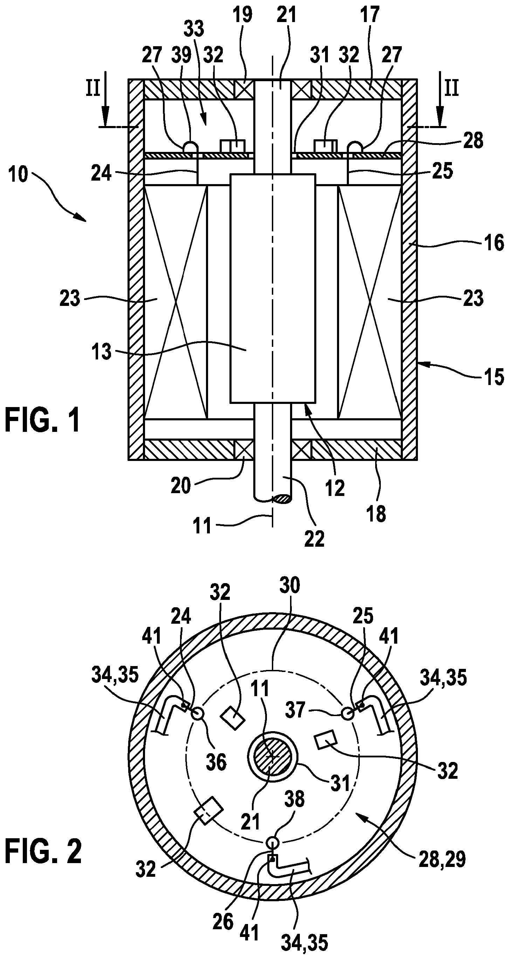

An der Innenwand des Statorgehäuses 16 sind sechs Spulenwicklungen 23 ortsfest angeordnet, von denen in der Darstellung der Fig. 1 lediglich zwei Spulenwicklungen 23 erkennbar sind. Die in gleichmäßigen Winkelabständen zueinander angeordneten Spulenwicklungen 23 weisen Wicklungsdrähte auf, die sich im Wesentlichen parallel zur Achse 11 des Elektromotors 10 in bekannter Art und Weise erstrecken. Insbesondere sind die Spulenwicklungen 23 mit der Innenwand des Statorgehäuse 15 verbunden, insbesondere durch Verguss mit einer entsprechenden, beispielsweise aus Epoxidharz ausgebildeten Masse (nicht dargestellt). Die Spulenwicklungen 23 bilden drei Phasen des Wicklungssystems des Elektromotors 10 aus, wozu jeweils zwei der Spulenwicklungen 23 elektrisch miteinander verbunden sind, wie dies aus dem Stand der Technik ebenfalls bekannt ist. Die drei gebildeten Phasen der Spulenwicklungen 23 weisen jeweils ein Wicklungsdrahtende 24, 25 bzw. 26 auf. Das Wicklungsdrahtende 24 bis 26 überragt den Bereich der Spulenwicklungen 23 auf der der Lagereinrichtung 19 zugewandten Seite axial in einer Richtung und ist zumindest an einem Endbereich 27 als rückgefaltetes und verdrilltes Wicklungsdrahtende 24 bis 26 ausgebildet.

Zwischen den Spulenwicklungen 23 und dem Gehäusedeckel 17 ist innerhalb des Gehäuses 15 ein Schaltungsträger 28 in Form einer Leiterplatte 29 angeordnet. Die Ebene der Leiterplatte 29 erstreckt sich zumindest im Wesentlichen senkrecht zur Achse 11 des Rotors 12. Ferner weist die Leiterplatte 29 konzentrisch zur Achse 11 eine Durchgangsöffnung 31 auf, durch die die Rotorwelle 21 hindurchragt, so dass die Drehbarkeit des Rotors 12 ohne einen mechanischen Kontakt zur Leiterplatte 29 gewährleistet ist. Auf der dem Gehäusedeckel 17 zugewandten, d.h. auf der den Spulenwicklungen 23 abgewandten Seite der Leiterplatte 29 trägt diese elektronische Bauteile 32 als Bestandteil einer Schaltung 33, die der Ansteuerung der Spulenwicklungen 23 bzw. der drei Phasen des Elektromotors 10 dienen. Darüber hinaus weist die Leiterplatte 29, wie insbesondere anhand der Fig. 2 erkennbar ist, auf der den Spulenwicklungen 23 abgewandten Seite elektrisch leitende Bereiche 34 in Form von Leiterbahnen 35 auf.

In Ausrichtung mit den Wicklungsdrahtenden 24 bis 26 weist die Leiterplatte 29 auf einem Teilkreisdurchmesser 30 beispielhaft in gleichmäßigen Winkelabständen zueinander angeordnete (runde) Durchgangsöffnungen 36 bis 38 auf, durch die die Wicklungsdrahtenden 24 bis 26 entsprechend der Darstellung der Fig. 1 und 2 hindurchgeführt sind. Dabei ist der Querschnitt der Durchgangsöffnungen 36 bis 38 derart bemessen, dass die Wicklungsdrahtenden 25 bis 26 mit Radialspiel innerhalb der Durchgangsöffnungen 36 bis 38 angeordnet sind. Wie besonders deutlich anhand der Fig. 1 erkennbar ist, sind die Wicklungsdrahtenden 24 bis 26 auf der den Spulenwicklungen 23 abgewandten Seite der Leiterplatte 29 gegen die elektrisch leitenden Bereiche 34 der Leiterbahnen 35 umgelegt und mit diesen elektrisch leitend verbunden. Beispielhaft sind entsprechend der Darstellung der Fig. 1 die Wicklungsdrahtenden 24 bis 26 in Form jeweils eines Bogens 39 rückgefaltet und mit der Oberseite der Bereiche 34 verbunden. Die Verbindung zwischen dem Wicklungsdrahtende 24 bis 26 und den Bereichen 34 erfolgt insbesondere durch eine im Einzelnen nicht dargestellte Löt- oder Schweißverbindung 41. Das Vorsehen einer Löt- bzw. Schweißverbindung 41 hat den Vorteil, dass bei Verwendung eines Lackdrahts für den Wicklungsdraht der Spulenwicklungen 23 die Lackschicht entfernt wird und somit der elektrische Kontakt zur Schaltung 33 hergestellt wird.

Selbstverständlich sind auch andere Kontaktierungsverfahren, wie Reibschweißverfahren oder ähnliches denkbar, um die Wicklungsdrahtenden 24 bis 26 mit den Bereichen 34 und somit mit der Schaltung 33 des Schaltungsträgers 28 zu verbinden. Die Anordnung der Durchgangsöffnungen 36 bis 38 zu den Spulenwicklungen 23 ist derart, dass zwischen dem axialen Ende der Spulenwicklungen 23 und der Leiterplatte 29 die Wicklungsdrahtenden 24 bis 26 parallel bzw. geradlinig zur Achse 11 geführt werden können.

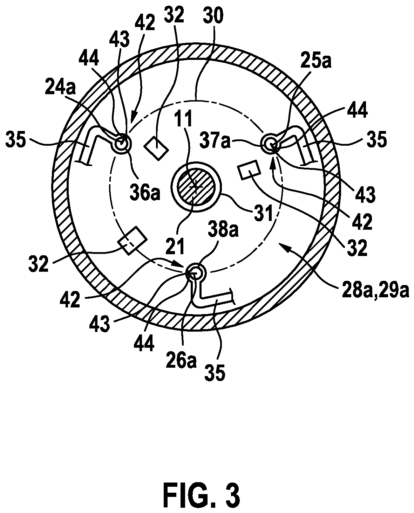

In der Fig. 3 ist die erfinderische Leiterplatte 29a bzw. Schaltungsträger 28a dargestellt, bei der die Durchgangsöffnungen 36a bis 38a zur Ausbildung einer Klemmschneidverbindung 42 zwischen den Wicklungsdrahtenden 24 bis 26 und der Leiterplatte 29a dienen. Hierzu sind die Durchgangsöffnungen 36a bis 38a mit einem sich verengenden Querschnitt, beispielsweise durch jeweils einen dreiecksförmigen Schlitz 44 ausgebildet, der von der (runden) Durchgangsöffnung 36a bis 38a ausgeht. Der Schlitz 44 dient der klemm- bzw. kraftschlüssigen Aufnahme der Wicklungsdrahtenden 24a bis 26a in dem verengenden Querschnitt des Schlitzes 44 in Form einer Klemmschneidverbindung 42. Darüber hinaus weisen die Durchgangsöffnungen 36a bis 38a zumindest in dem mit den Wicklungsdrahtenden 24a bis 26a verbundenen Bereich der Schlitze 44 beispielsweise eine metallische Beschichtung 43 auf, die mit den Leiterbahnen 35 der Schaltung 33 verbunden ist. Je nach Dicke des Wicklungsdrahts der Spulenwicklungen 23 ist es bei dem in der Fig. 3 dargestellten Ausführungsbeispiel denkbar, die Wicklungsdrahtenden 24a bis 26a nicht rückzufalten bzw. zu verdrillen. Darüber hinaus ist es selbstverständlich denkbar, zusätzlich zur Klemmschneidverbindung 42 die Wicklungsdrahtenden 24a bis 26a zusätzlich stoffschlüsig mit den Oberseiten der Leiterbahnen 35 zu verbinden, wie dies bei der Fig. 1 und 2 vorgesehen ist.

Der soweit beschriebene Elektromotor 10 kann in vielfältiger Art und Weise modifiziert werden, ohne vom Erfindungsgedanken abzuweichen. Dieser besteht darin, die Spulenwicklungen 23 unmittelbar, d.h. ohne zusätzliche Zwischenelemente, mit einem Schaltungsträger 28, 28a zur Ansteuerung der Spulenwicklungen 23 zu kontaktieren. Die Erfindung wird durch die Angehängten Ansprüche definiert.

## Patentansprüche

1. Elektrisch kommutierter Elektromotor (10), mit mehreren ortsfest angeordneten Spulenwicklungen (23), wobei jede Spulenwicklung (23) wenigstens einen Wicklungsdraht mit einem Wicklungsdrahtende (24; 24a, 25; 25a, 26; 26a) aufweist, und wobei das Wicklungsdrahtende (24; 24a, 25; 25a, 26; 26a) elektrisch zumindest mittelbar mit einem Schaltungsträger (28; 28a) zur Ansteuerung der Spulenwicklungen (23) verbunden ist,
wobei
das Wicklungsdrahtende (24; 24a, 25; 25a, 26; 26a) unmittelbar mit einem elektrisch leitenden Bereich (34) des Schaltungsträgers (28; 28a) verbunden ist, wobei der Schaltungsträger (28; 28a) als Leiterplatte (29; 29a) und der leitende Bereich (34) als Leiterbahn (35) ausgebildet ist,
wobei der leitende Bereich (34) des Schaltungsträgers (28; 28a) auf der den Spulenwicklungen (23) abgewandten Seite des Schaltungsträgers (28; 28a) angeordnet ist, und wobei der Schaltungsträger (28; 28a) eine Aussparung (36; 36a, 37; 37a, 38; 38a) zur Durchführung des Wicklungsdrahtendes (24; 24a, 25; 25a, 26; 26a) aufweist,
**dadurch gekennzeichnet, dass** die Aussparung (36a, 37a, 38a) als Bestandteil einer Klemmschneidverbindung (42) mit einem verengten Schneidbereich (44) für das Wicklungsdrahtende (24a, 25a, 26a) ausgebildet ist, und dass der elektrisch leitende Bereich (34) im Anlagebereich des Wicklungsdrahtendes (24a, 25a, 26a) mit der Aussparung (36a, 37a, 38a) verbunden ist, insbesondere in Form einer metallischen Beschichtung (43).

2. Elektromotor nach Anspruch 1,
**dadurch gekennzeichnet,**
**dass** die Aussparung (36; 36a, 37; 37a, 38; 38a) in Form einer Durchgangsöffnung ausgebildet ist, und dass das Wicklungsdrahtende (24; 24a, 25; 25a, 26; 26a) mit der Oberseite des elektrisch leitenden Bereichs (34) verbunden ist.

3. Elektromotor nach einem der vorhergehenden Ansprüche,
**dadurch gekennzeichnet,**
**dass** die Verbindung zwischen dem Wicklungsdrahtende (24; 24a, 25; 25a, 26; 26a) und dem elektrisch leitenden Bereich (34) des Schaltungsträgers (28; 28a) als Löt- oder Schweißverbindung (41) ausgebildet ist.

4. Elektromotor nach einem der Ansprüche 1 bis 3,
**dadurch gekennzeichnet,**
**dass** das Wicklungsdrahtende (24; 24a, 25; 25a, 26; 26a) als rückgefaltetes und verdrilltes Wicklungsdrahtende (24; 24a, 25; 25a, 26; 26a) ausgebildet ist.

5. Elektromotor nach einem der Ansprüche 1 bis 4,
**dadurch gekennzeichnet,**
**dass** der Schaltungsträger (28; 28a) eine Durchgangsöffnung (31) für einen Magnetelemente (13) tragenden, drehbar gelagerten Rotor (12) aufweist, und dass der Schaltungsträger (28; 28a) zumindest im Wesentlichen senkrecht zur Drehachse (11) des Rotors (12) angeordnet ist.

6. Komfortantrieb für ein Kraftfahrzeug mit einem Elektromotor (10) nach einem der Ansprüche 1 bis 5.

## Claims

1. Electrically commutated electric motor (10), comprising a plurality of coil windings (23) which are arranged in a stationary manner, wherein each coil winding (23) has at least one winding wire with a winding wire end (24; 24a, 25; 25a, 26; 26a), and wherein the winding wire end (24; 24a, 25; 25a, 26; 26a) is electrically at least indirectly connected to a circuit carrier (28; 28a) for driving the coil windings (23),
wherein
the winding wire end (24; 24a, 25; 25a, 26; 26a) is directly connected to an electrically conductive region (34) of the circuit carrier (28; 28a), wherein the circuit carrier (28; 28a) is in the form of a printed circuit board (29; 29a) and the conductive region (34) is in the form of a conductor track (35),
wherein the conductive region (34) of the circuit carrier (28; 28a) is arranged on that side of the circuit carrier (28; 28a) which is averted from the coil windings (23), and wherein the circuit carrier (28; 28a) has a cutout (36; 36a, 37; 37a, 38; 38a) for leading the winding wire end (24; 24a, 25; 25a, 26; 26a) through,
**characterized in that** the cutout (36a, 37a, 38a) is in the form of a constituent part of an insulation-displacement connection (42) with a constricted cutting region (44) for the winding wire end (24a, 25a, 26a), and **in that** the electrically conductive region (34) is connected to the cutout (36a, 37a, 38a) in the contact region of the winding wire end (24a, 25a, 26a), in particular in the form of a metal coating (43).

2. Electric motor according to Claim 1,
**characterized**
**in that** the cutout (36; 36a, 37; 37a, 38; 38a) is in the form of a passage opening, and in that the winding wire end (24; 24a, 25; 25a, 26; 26a) is connected to the top side of the electrically conductive region (34).

3. Electric motor according to either of the preceding claims,
**characterized**
**in that** the connection between the winding wire end (24; 24a, 25; 25a, 26; 26a) and the electrically conductive region (34) of the circuit carrier (28; 28a) is in the form of a soldered or welded connection (41).

4. Electric motor according to any of Claims 1 to 3,
**characterized**
**in that** the winding wire end (24; 24a, 25; 25a, 26; 26a) is in the form of a folded-back and twisted winding wire end (24; 24a, 25; 25a, 26; 26a).

5. Electric motor according to any of Claims 1 to 4,
**characterized**
**in that** the circuit carrier (28; 28a) has a passage opening (31) for a rotatably mounted rotor (12) supporting magnet elements (13), and in that the circuit carrier (28; 28a) is arranged at least substantially perpendicularly in relation to the rotation axis (11) of the rotor (12).

6. Comfort drive for a motor vehicle having an electric motor (10) according to any of Claims 1 to 5.

## Revendications

1. Moteur électrique (10) à commutation électrique, comprenant une pluralité d'enroulements de bobine (23) agencés de manière fixe, chaque enroulement de bobine (23) présentant au moins un fil d'enroulement avec une extrémité (24 ; 24a, 25 ; 25a, 26 ; 26a) du fil d'enroulement, et l'extrémité (24 ; 24a, 25 ; 25a, 26 ; 26a) du fil d'enroulement étant reliée électriquement au moins indirectement à un support de circuit (28 ; 28a) pour la commande des enroulements de bobine (23),
dans lequel
l'extrémité (24 ; 24a, 25 ; 25a, 26 ; 26a) du fil d'enroulement est reliée directement à une zone électriquement conductrice (34) du support de circuit (28 ; 28a), le support de circuit (28 ; 28a) étant réalisé sous la forme d'une carte à circuit imprimé (29 ; 29a) et la zone conductrice (34) étant réalisée sous la forme d'une piste conductrice (35),
la zone conductrice (34) du support de circuit (28 ; 28a) étant agencée sur le côté du support de circuit (28 ; 28a) opposé aux enroulements de bobine (23), et le support de circuit (28 ; 28a) présentant un évidement (36 ; 36a, 37 ; 37a, 38 ; 38a) pour le passage de l'extrémité (24 ; 24a, 25 ; 25a, 26 ; 26a) du fil d'enroulement,
**caractérisé en ce que** l'évidement (36a, 37a, 38a) est conçu comme partie intégrante d'une liaison (42) par serrage et coupe avec une zone de coupe rétrécie (44) pour l'extrémité (24a, 25a, 26a) du fil d'enroulement, et **en ce que** la zone électriquement conductrice (34) est reliée à l'évidement (36a, 37a, 38a) dans la zone d'appui de l'extrémité (24a, 25a, 26a) du fil d'enroulement, en particulier sous la forme d'un revêtement métallique (43) .

2. Moteur électrique selon la revendication 1,
**caractérisé**
**en ce que** l'évidement (36 ; 36a, 37 ; 37a, 38 ; 38a) est réalisé sous la forme d'une ouverture de passage, et en ce que l'extrémité (24 ; 24a, 25 ; 25a, 26 ; 26a) du fil d'enroulement est reliée au côté supérieur de la zone électriquement conductrice (34).

3. Moteur électrique selon l'une quelconque des revendications précédentes,
**caractérisé**
**en ce que** la liaison entre l'extrémité (24 ; 24a, 25 ; 25a, 26 ; 26a) du fil d'enroulement et la zone électriquement conductrice (34) du support de circuit (28 ; 28a) est réalisée sous forme de liaison soudée ou brasée (41).

4. Moteur électrique selon l'une des revendications 1 à 3,
**caractérisé**
**en ce que** l'extrémité (24 ; 24a, 25 ; 25a, 26 ; 26a) du fil d'enroulement est conçue sous la forme d'une extrémité (24 ; 24a, 25 ; 25a, 26 ; 26a) du fil d'enroulement repliée et torsadée.

5. Moteur électrique selon l'une des revendications 1 à 4,
**caractérisé**
**en ce que** le support de circuit (28 ; 28a) présente une ouverture traversante (31) pour un rotor (12) monté rotatif, portant des éléments magnétiques (13), et en ce que le support de circuit (28 ; 28a) est agencé au moins sensiblement perpendiculairement à l'axe de rotation (11) du rotor (12).

6. Entraînement de confort pour un véhicule automobile comprenant un moteur électrique (10) selon l'une des revendications 1 à 5.
